# EUROPEAN PATENT SPECIFICATION

(11) **EP 3 124 765 B1**
(45) Date of publication and mention of the grant of the patent: **07.07.2021**
(21) Application number: 16179608.1
(22) Date of filing: 15.07.2016
(51) Int. Cl.: F01P 3/20, F02B 39/00

(54) **COOLING CONTROL DEVICE**
KÜHLUNGSSTEUERUNGSVORRICHTUNG
DISPOSITIF DE COMMANDE DE REFROIDISSEMENT

(30) Priority: 31.07.2015 JP 2015152037
(43) Date of publication of application: 01.02.2017
(73) Proprietor: Mitsubishi Jidosha Kogyo Kabushiki Kaisha, Tokyo 108-8410 (JP)
(72) Inventor: MATSUDA, Seiji, Tokyo 108-8410 (JP); OSHIMA, Hiroki, Tokyo 108-8410 (JP); HATA, Koji, Tokyo 108-8410 (JP); YAMAMOTO, Takeshi, Tokyo 108-8410 (JP)
(74) Representative: Vossius & Partner Patentanwälte Rechtsanwälte mbB

(56) References cited:
- EP-A1- 2 224 110
- DE-A1-102006 044 680
- DE-A1-102011 101 337
- DE-A1-102012 208 009
- JP-A- 2005 090 236
- US-A1- 2013 255 600
- None

## Description

### FIELD

The present invention relates to a cooling control device to cool a charger or an auxiliary machine of an engine.

### BACKGROUND

A technology to cool a charger or an auxiliary machine of an engine by operating an electric pump set on a refrigerant circulation path for cooling the charger or the auxiliary machine while the engine is stopped has been known. That is, in addition to (or instead of) a mechanical pump using a driving force of the engine, an electric pump operable by power of a battery is provided. In this technology, engine cooling water or engine lubricating oil, for example, may be used as a refrigerant to cool the charger or the auxiliary machine of the engine such as an alternator. Accordingly, coolability (passive cooldown performance) of the charger or the auxiliary machine can be improved not only while the engine drives, but also after the engine is stopped (see EP2224110A1 Japanese Patent No. 3075289 and Japanese Patent No. 4830922).

### SUMMARY

### TECHNICAL PROBLEMS

Incidentally, vehicles with an idling stop function may be controlled so that the engine thereof stops automatically while coasting or waiting at traffic lights. Even in such an engine-stopped state, a refrigerant can be supplied to the charger or the auxiliary machine by actuating the electric pump, so that, for example, the coolability of the charger can be improved.

However, compared with an engine stop when a passenger gets off, an engine stop caused by the idling stop lasts a shorter time and thus, together with a normal cooling function to be reactivated after the engine is restarted, the charger or the auxiliary machine may be cooled more than necessary. In addition, for example, the charger is also stopped during the idling stop, the cooling performance can be excessive compared with a case where the engine is driving; hence, and rapid cooling may be caused. Such overcooling or rapid cooling could cause a failure or a malfunction of the charger or the auxiliary machine.

An object of the present disclosure invented in view of the above challenges is to provide a cooling control device that achieves appropriate cooling performance for a charger or an auxiliary machine in an engine-stopped state caused by an idling stop.

### SOLUTION TO PROBLEMS

(1) A cooling control device disclosed herein includes an electric pump set up on a circulation path of a refrigerant that cools a charger of an engine or an auxiliary machine attached to the engine, the electric pump pressure-feeding the refrigerant. The cooling control device also includes a detector that detects an engine-stopped state caused by an idling stop and an engine-stopped state independent of the idling stop. Further, the cooling control device includes a controller that controls work to be done by the electric pump in the engine-stopped states in accordance with a detection result by the detector. The controller makes the work to be done in the engine-stopped state caused by the idling stop smaller than the work to be done in the engine-stopped state independent of the idling stop.
   The work described herein corresponds to the amount of work to be given by the electric pump to the refrigerant in an actuation time of the electric pump, and has a value correlating with the amount of refrigerant to be supplied to the charger or the auxiliary machine from the electric pump, and/or cooling performance for the charger or the auxiliary machine by the electric pump. For example, the work may be expressed as a product of the amount of discharge per unit time of the electric pump and an operation time of the electric pump, or a product of the cooling performance per unit time by the electric pump and the operation time. When the amount of discharge is controlled by the duty method [pulse width modulation method (PWM method)], the work may be expressed as a product of the duty ratio of the electric pump and the operation time thereof.
   In the engine-stopped state independent of the idling stop, the controller cools the charger or the auxiliary machine by operating the electric pump for a set time after the engine is stopped.
(2) The electric pump preferably includes an oil pump that pressure-feeds lubricating oil to be supplied to a bearing of the charger or the auxiliary machine and a water pump that pressure-feeds cooling water flowing inside a housing of the bearing. In this case, the controller preferably makes an operation time of the oil pump longer than that of the water pump in the engine-stopped states.
(3) The controller preferably increases output of the water pump with a rising temperature of the lubricating oil.
(4) The controller preferably maintains output of the oil pump at a base value for at least a set time regardless of a temperature of the lubricating oil.
(5) The controller preferably increases initial output of the electric pump with an increasing load of the engine to be stopped.
   For example, in a case where a vehicle travels under high load conditions before the engine is stopped, the controller preferably sets initial output of the electric pump to the maximum output. The load of the engine may be estimated from a history of the number of engine rotation, the required torque of the engine, the operation by the accelerator pedal, or the like.
(6) The controller preferably decreases initial output of the electric pump with an increasing number of the idling stops of the engine within a set period in a past.
(7) The controller preferably gradually decreases output of the electric pump with an elapsed time.
(8) The detector preferably determines two types of the engine-stopped states based on an operative position of an ignition key switch. In this case, the controller preferably makes the work to be done smaller when the operative position is an ON position than when the operative position is an OFF position.
(9) Another cooling control device disclosed herein, but not belonging to the invention, includes an electric pump set up on a circulation path of a refrigerant that cools a charger of an engine or an auxiliary machine attached to the engine, and the electric pump pressure-feeding the refrigerant. The cooling control device also includes a controller that controls work to be done by the electric pump in an engine-stopped state. Further, the electric pump includes an oil pump that pressure-feeds lubricating oil supplied to a bearing of the charger or the auxiliary machine and a water pump that pressure-feeds cooling water flowing inside a housing of the bearing. In addition, the controller makes an operation time of the oil pump longer than that of the water pump in the engine-stopped state.
(10) The controller preferably increases output of the water pump with a rising temperature of the lubricating oil.
(11) The controller preferably maintains output of the oil pump at a base value for at least a set time regardless of a temperature of the lubricating oil.
(12) The controller preferably increases initial output of the electric pump with an increasing load of the engine to be stopped.
(13) The controller preferably decreases initial output of the electric pump with an increasing number of the idling stops of the engine within a set period in past.
(14) The controller preferably gradually decreases output of the electric pump with an elapsed time.
(15) The cooling control device preferably further includes a detector that detects an engine-stopped state caused by an idling stop and an engine-stopped state independent of the idling stop. In this case, the detector preferably determines two types of the engine-stopped states based on an operative position of an ignition key switch.

### ADVANTAGEOUS EFFECTS

In the engine-stopped state caused by the idling stop, the work to be done by the electric pump is made smaller than that in another engine-stopped state, so that the rapid cooling and overcooling of the charger or the auxiliary machine can be suppressed, and thus, appropriate cooling performance for the charger or the auxiliary machine can be achieved.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:
FIG. 1 is a diagram showing a structure of an engine to which a cooling control device is applied;
FIG. 2 is a sectional view schematically showing an internal structure of a charger;
FIG. 3 shows graphs illustrating settings of work to be done by an electric pump, FIG. 3A is a graph showing a relationship between a duty ratio and an oil temperature, and FIG. 3B is a graph showing a relationship between an operation time and the oil temperature;
FIG. 4 is a graph illustrating the work to be done by the electric pump;
FIG. 5 is a flow chart illustrating control procedures to be performed by the cooling control device;
FIG. 6 is a flow chart illustrating control procedures to be performed by the cooling control device; and
FIGS. 7A to 7C are graphs illustrating modifications of control.

### DESCRIPTION OF EMBODIMENTS

Hereinafter, a cooling control device as an embodiment will be described with reference to the drawings. However, the embodiment shown below is only an exemplification, and is not construed to exclude various modifications and the application of technology that are not explicitly shown in the embodiment below. Each configuration in the present embodiment can be carried out in various modifications without deviating from the spirit thereof. Also, selections can be made when necessary and an appropriate combination can be devised.

### [1. Device configuration]

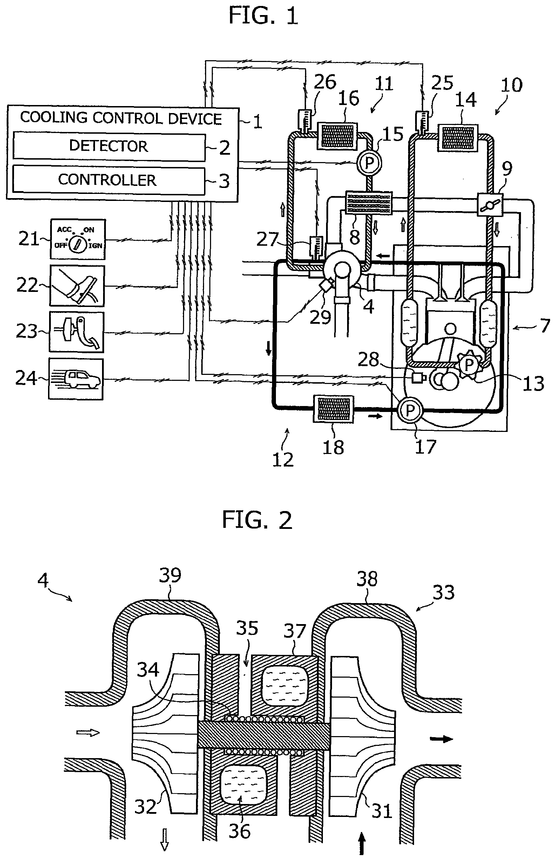

The configuration of an engine 7 to which a cooling control device according to the present embodiment is applied is illustrated in FIG. 1. The engine 7 is a turbo engine with a charger 4 (turbocharger) provided with an idling stop function. The charger 4 is a turbocharging device that feeds intake air into a cylinder using exhaust pressure and is mounted so as to extend over an intake system and an exhaust system of the engine 7. As shown in FIG. 2, the charger 4 includes a turbine 31 arranged on an exhaust passage and a compressor 32 arranged on an intake passage. In FIG. 2, the outline arrows show an intake flow and black arrows show an exhaust flow.

The turbine 31 and the compressor 32 are provided so as to be rotatable around a common rotating shaft and are supported by a housing 33 via a bearing 34. The housing 33 of the charger 4 is roughly divided into three portions which are a bearing portion 37, a turbine housing portion 38, and a compressor housing portion 39. The turbine housing portion 38 and the compressor housing portion 39 accommodate the turbine 31 and the compressor 32, respectively. The bearing portion 37 (cartridge part, bearing part) links the turbine housing portion 38 and the compressor housing portion 39, and contains the bearing 34. An oil passage 35 and a water passage 36 are provided inside the bearing portion 37. The oil passage 35 is a passage through which lubricating oil (one of refrigerants) for lubricating and cooling the bearing 34 flows, and is formed from an outer surface of the bearing portion 37 toward the bearing 34 at the center of the bearing portion 37. The water passage 36 is a passage through which engine cooling water (one of refrigerants) for cooling the bearing 34 and the entire housing 33 flows, and is arranged so as to surround the outer circumference of the bearing 34.

As shown in FIG. 1, an intercooler 8 and a throttle body 9 are arranged downstream of the charger 4 (on a side closer to the cylinder) on the intake passage of the engine 7. The intercooler 8 is a heat exchanger for cooling supercharged air compressed by the compressor 32. The throttle body 9 is a device containing a throttle valve for controlling the amount of intake air to be supplied to the cylinder of the engine 7, and is arranged downstream of the intercooler 8.

The engine 7 is provided with three systems of cooling circuit, that is, a first cooling water circuit 10, a second cooling water circuit 11, and a lubricating oil circuit 12. Each of the first cooling water circuit 10 and the second cooling water circuit 11 is a circulation path for the engine cooling water as a refrigerant, and the lubricating oil circuit 12 is a circulation path for engine oil (lubricating oil) as a refrigerant. The first cooling water circuit 10 is a circuit for cooling the body portion (such as a cylinder block and a cylinder head) of the engine 7. In contrast, the second cooling water circuit 11 is a circuit mainly for cooling the charger 4 and an auxiliary machine (such as an alternator, a motor generator, and an air conditioner) of the engine 7. In the present embodiment, the second cooling water circuit 11 is connected also to the intercooler 8 to form a water-cooled structure for cooling the supercharged air. The lubricating oil circuit 12 is a circuit for cooling as well as lubricating the engine 7 and the auxiliary machine.

The throttle body 9 containing a throttle valve, a mechanical pump 13, a first radiator 14, and a first water temperature sensor 25 are set up on the first cooling water circuit 10. The mechanical pump 13 is a mechanical compressor operable by a driving force of the engine 7, and the first radiator 14 is a heat exchanger that dissipates heat of the engine cooling water circulating through the first cooling water circuit 10 into outside air. The first water temperature sensor 25 detects the temperature of the engine cooling water in the first cooling water circuit 10 as a first water temperature.

The charger 4, the intercooler 8, the water pump 15 (one of electric pumps), a.second radiator 16, and a second water temperature sensor 26 are set up on the second cooling water circuit 11. The second cooling water circuit 11 is connected to the water passage 36 of the charger 4. The water pump 15 is an electric compressor operable by power of a battery, and the second radiator 16 is a heat exchanger that dissipates heat of the engine cooling water circulating through the second cooling water circuit 11 into outside air. The second water temperature sensor 26 detects the temperature of the engine cooling water in the second cooling water circuit 11 as a second water temperature. The second water temperature is basically lower than the first water temperature, but has a tendency to rise during the supercharging.

The charger 4, an oil pump 17 (one of electric pumps), an oil cooler 18, and an oil temperature sensor 27 are set up on the lubricating oil circuit 12. The lubricating oil circuit 12 is connected to the oil passage 35 of the charger 4. The oil pump 17 is an electric compressor operable by power of a battery, and the oil cooler 18 is a heat exchanger that dissipates heat of the lubricating oil circulating through the lubricating oil circuit 12 into outside air. The oil temperature sensor 27 detects the temperature (oil temperature) of the lubricating oil near the bearing 34 of the charger 4. In the present embodiment, the oil temperature of the lubricating oil after passing through the bearing 34 of the charger 4 (oil temperature downstream of the bearing 34) is detected.

The operation states of the water pump 15 and the oil pump 17 are controlled by a control device 1 functioning as a computer. The control device 1 is an electronic device (ECU, electronic control device) in which a processor such as CPU (Central Processing Unit), MPU (Micro Processing Unit) or the like and ROM (Read Only Memory), RAM (Random Access Memory), a nonvolatile memory and the like are integrated. The processor here is a processing unit (processor) containing, for example, a control unit (control circuit), an arithmetic unit (arithmetic circuit), a cache memory (register) and the like. The ROM, RAM, and nonvolatile memory are memory devices in which programs and data during execution of work are stored. The content of control executed by the control device 1 is recorded in the ROM, RAM, nonvolatile memory, or removable medium as firmware or application programs. When a program is executed, the content of the program is expanded into the memory space in the RAM and executed by the processor.

In addition to the first water temperature sensor 25, the second water temperature sensor 26, and the oil temperature sensor 27, an ignition key switch 21, an accelerator pedal position sensor 22, a brake pressure sensor 23, a vehicle speed sensor 24, an engine rotation sensor 28, and a turbo rotation sensor 29 are connected to the control device 1.

The ignition key switch 21 (hereinafter, called the IGN switch 21) outputs a signal (IG signal) as a trigger of power-off or power-on of the main power of a vehicle, a start operation of the engine 7 or the like in accordance with the passenger's operation. Operative positions of the IGN switch 21 include four positions: an OFF position (IGN-OFF), an accessory position (ACC), an ON position (IGN-ON), and a start position (IGN) . The main power of the vehicle is turned off in the OFF position, and power is supplied to on-board electrical equipment other than electrical equipment for driving the engine 7 in the accessory position. In these operative positions, the engine 7 is controlled to be in a stopped state. Power is supplied to a starter for starting the engine 7 in the start position, and power is supplied to all electrical equipment in the ON position. he operative position is always set to the ON position while the engine 7 drives.

The accelerator pedal position sensor 22 detects an accelerator pedal position corresponding to the amount of operation in an accelerator pedal, and the brake pressure sensor 23 detects a brake pressure corresponding to the amount of operation in a brake pedal. The vehicle speed sensor 24, the engine rotation sensor 28, and the turbo rotation sensor 29 detect the vehicle speed, the number of engine rotation (rotational speed), and the number of turbo rotation (rotational speed of the turbine 31 or the compressor 32), respectively. Information detected by the above various sensors 21 to 29 is transmitted to the control device 1.

### [2. Control configuration]

In the present embodiment, of all control performed by the control device 1, the operation control of the water pump 15 and the oil pump 17 in a stopped state of the engine 7 will now be described. The control device 1 has a function of modulating the values of current for operating each of the electric pumps 15, 17 to pulse signals and outputting the signals. The applicable modulation technique includes, for example, the PWM (Pulse Width Modulation), the PAM (Pulse Amplitude Modulation), and the PPM (Pulse Position Modulation), and the technique can be selected in accordance with characteristics of the electric pumps 15, 17. The present embodiment assumes a case in which the PWM is used for controlling the output of the electric pumps 15, 17.

The control device 1 is provided with the detector 2 and the controller 3 as elements to implement the functions of the operation control of the electric pumps 15, 17. These elements represent a portion of functions of a program to be executed by the control device 1, and are assumed to be implemented by software. However, a portion or all of each function may be implemented by hardware (electronic control circuit) or a combination of software and hardware.

The detector 2 distinguishes and detects an engine-stopped state caused by an idling stop and an engine-stopped state independent of the idling stop. The engine-stopped state caused by an idling stop implies a stopped-state of the engine 7 under satisfaction of criteria idling stop condition. For example, when the following conditions 1 to 4 are all met, the idling stop condition is determined to be satisfied:
Condition 1: The operative position of the IGN switch 21 is the ON position
Condition 2: The accelerator pedal position is 0 (the accelerator pedal is not operated)
Condition 3: The brake pressure is equal to a certain value or more (the brake pedal is operated)
Condition 4: The vehicle speed is 0 (the vehicle is not moving)

The detector 2 according to the present embodiment discerns and detects two types of the engine-stopped states based on the operative position of the IGN switch 21. That is, if the IGN switch 21 is in the ON position (IGN-ON) immediately before the engine 7 is stopped (or while the engine 7 is not operating), the engine-stopped state is determined to be caused by the idling stop. On the other hand, if the IGN switch 21 is in the OFF position (IGN-OFF), the engine-stopped state is determined to be independent of the idling stop. The determination result (detection result) here is transmitted to the controller 3.

Instead of Condition 1 described above, Conditions 5, 6 described below may be used. Thus, two types of the engine-stopped states can be discerned and detected based on, instead of the information on the operative position of the IGN switch 21, information on an energized state of the control device 1 or a signal input from other ECU.
Condition 5: The control device 1 is energized
Condition 6: A signal indicating an idling-stopped state is input from other ECU

The controller 3 sets and controls work to be done by the water pump 15 and the oil pump 17 (amount of work to be given by each of the electric pumps 15, 17 to the refrigerant) in the engine-stopped states in accordance with the detection result by the detector 2. In the present embodiment, the product of the duty ratio for operating the electric pumps 15, 17 and the operation time is regarded as the work to be done by the electric pumps 15, 17, and the duty ratio D and the operation time T (actuation time) of each of the electric pumps 15, 17 in the engine-stopped states are set by the controller 3.

The duty ratio D here corresponds to the percentage of the signal width in an ON state (ON duration) over the pulse signal width in an ON-and-OFF cycle (one pulse period). The output (corresponding to a pump head, the number of a pump rotation, an amount of a refrigerant pumped or the like per unit time) of the electric pumps 15, 17 decreases with a decreasing duty ratio D and the output increases with an increasing duty ratio D.

The controller 3 sets initial values of the duty ratio D and the operation time T for each of the water pump 15 and the oil pump 17 basically on the basis of the load and the oil temperature immediately before the engine 7 is stopped. The duty ratio D_{WP} of the water pump 15 may be changed in accordance with a rise and fall of the oil temperature during the operation of the water pump 15, and may alternatively be maintained constant at the initial value. On the other hand, the duty ratio D_{OP} of the oil pump 17 is preferably maintained constant at the initial value, but may also be changed in accordance with a rise and fall of the oil temperature during the operation of the oil pump 17.

In a case where the load of the engine 7 is heavy or the idling stop is frequently executed, it is preferable to set at least the duty ratio D_{WP} (whose output is lower than the normal output) dedicated to the water pump 15. Also in this case, settings of the duty ratio D and the operation time T for each of the electric pumps 15, 17 may be made once before or after the engine 7 is stopped, or may appropriately be updated in accordance with variations of the oil temperature while each of the electric pumps 15, 17 is operated.

The initial values of the duty ratio D of the water pump 15 and the oil pump 17 in the present embodiment are basically set to increase with an increasing load and with an increasing oil temperature. The magnitude of load of the engine 7 can be calculated based on the number of engine rotation or the turbo rotation, vehicle speed, accelerator pedal position, the temperature of the engine cooling water, and the like within a set time immediately before the engine 7 is stopped.

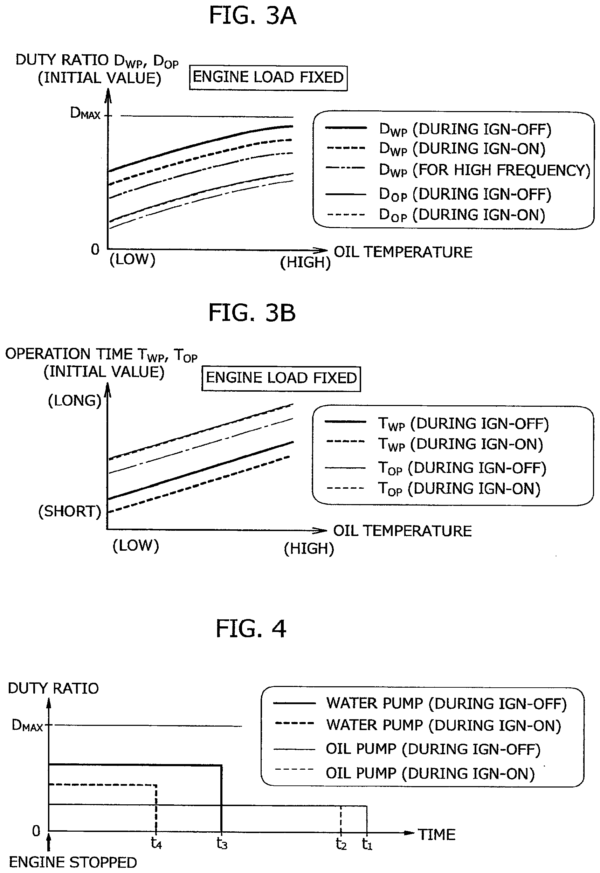

The initial value of the duty ratio D_{WP} of the water pump 15, as shown in FIG. 3A, is set to a value larger than the initial value of the duty ratio D_{OP} of the oil pump 17. The duty ratio D_{WP} of the water pump 15 is appropriately updated in accordance with changes of the oil temperature and is controlled to increase with an increasing oil temperature by applying, for example, settings shown in FIG. 3A. In contrast, the duty ratio D_{OP} of the oil pump 17 is assumed to be maintained constant during the operation of the oil pump 17. If the duty ratio D_{OP} of the oil pump 17 is also to be updated in accordance with changes of the oil temperature, the duty ratio D_{OP} may also be controlled to increase with an increasing oil temperature by applying, for example, settings shown in FIG. 3A.

Each operation time T of the water pump 15 and the oil pump 17 is set to lengthen with an increasing load and with an increasing oil temperature. The operation time T_{WP} of the water pump 15 is set so as to be, as shown in FIG. 3B, shorter than the operation time T_{OP} of the oil pump 17.

The duty ratio D_{WP} of the water pump 15 is set smaller when the operative position of the IGN switch 21 is the ON position (IGN-ON) than when the operative position is the OFF position (IGN-OFF). Further, the operation time T_{WP} of the water pump 15 is set shorter when the operative position of the IGN switch 21 is the ON position (IGN-ON) than when the operative position is the OFF position (IGN-OFF). That is, the work to be done by the water pump 15 in the engine-stopped state caused by the idling stop is controlled to be smaller than the work to be done in the engine-stopped state independent of the idling stop. Accordingly, rapid cooling and overcooling of the charger 4 during the idling stop can be suppressed.

In contrast, the duty ratio D_{OP} of the oil pump 17 is maintained constant regardless of the operative position of the IGN switch 21 and is set constant if the load and the oil temperature are constant. Also, the operation time T_{OP} of the oil pump 17 is maintained constant regardless of the operative position of the IGN switch 21 and is set to be constant if the load and the oil temperature are constant. The operation time T_{OP} is set at least to be longer than the operation time T_{OP} of the water pump 15. Accordingly, the heat of the bearing 34 of the charger 4 can be stably carried away. However, as indicated by the dash-dot lines in FIGS. 3A and 3B, the duty ratio D_{OP} and the operation time T_{OP} may be set slightly smaller when the operative position of the IGN switch 21 is the ON position (IGN-ON) than when the operative position is the OFF position (IGN-OFF). Accordingly, rapid cooling and overcooling of the bearing 34 during the idling stop can be suppressed.

An upper limit D_{MAX} in FIG. 3A is the duty ratio D_{WP} of the water pump 15 set exceptionally when the load of the engine 7 is equal to a criterial load or more (or the number of turbo rotation is equal to a criterial number or more). If the load immediately before the engine 7 is stopped is heavy , the controller 3 sets the duty ratio D_{WP} of the water pump 15 to the upper limit D_{MAX} regardless of the operative position of the IGN switch 21 or the oil temperature. Accordingly, coolability of the charger 4 immediately after a heavy-load operation of the engine 7 is improved.

The dash-dot-dot line in FIG. 3A is a graph showing the duty ratio D_{WP} of the water pump 15 set exceptionally when the idling stop is frequently executed. The controller 3 measures the number of times that the idling stop is executed (number of idling stops) in a set period (for example, a few tens of minutes to a few hours) immediately before and if the number is equal to a certain number or more, sets the duty ratio D_{WP} of the water pump 15 to a value slightly smaller than the value set when the operative position of the IGN switch 21 is the ON position (IGN-ON). Accordingly, rapid cooling and overcooling of the charger 4 during frequent idling stops can be suppressed. In the present embodiment, it is assumed that output characteristics of the water pump 15 are changed such that the graph of the dash-dot-dot line in FIG. 3A moves downward (initial output of the water pump 15 decreases) with an increasing frequency of the idling stop executed (with an increasing number of the idling stops).

The relationship between an operational state of the engine 7 and a control state of the electric pumps 15, 17 is illustrated in FIG. 4. If the load of the engine 7 and the oil temperature are constant, the duty ratio D_{WP} of the water pump 15 is set smaller during IGN-ON than during IGN-OFF and also the operation time T_{WP} is set shorter. Here, settings are made such that the area of a portion surrounded by the thick broken line (work to be done by the water pump 15 during IGN-ON) becomes smaller than the area of a portion surrounded by the thick solid line (work to be done by the water pump 15 during IGN-OFF) . In contrast, each of the duty ratio D_{OP} and the operation time T_{OP} of the oil pump 17 is set identical during both IGN-OFF and IGN-ON, and also at least the operation time T_{OP} is set such that the oil pump 17 continues to operate longer than the water pump 15 does.

As shown in FIG. 4, the electric pumps 15, 17 are operated for a set time after the engine 7 is stopped during IGN-OFF to cool the charger 4.

### [3. Flow chart]

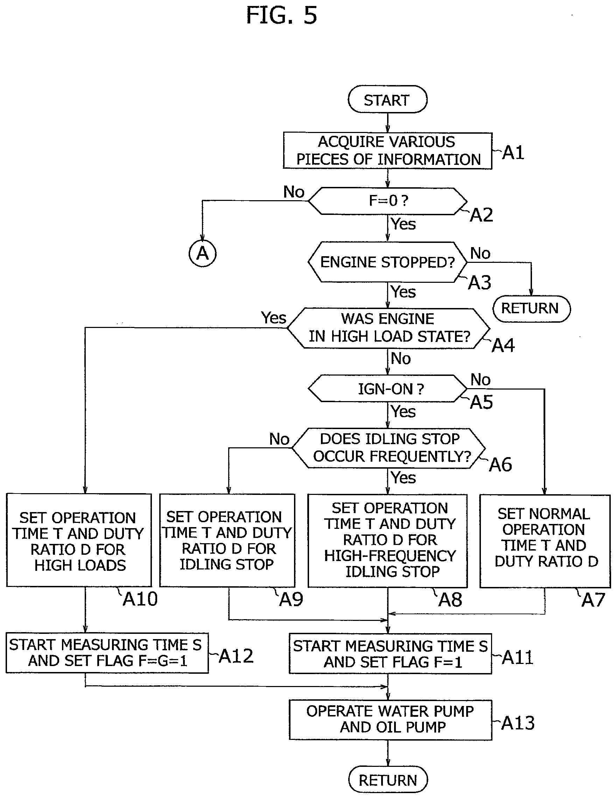

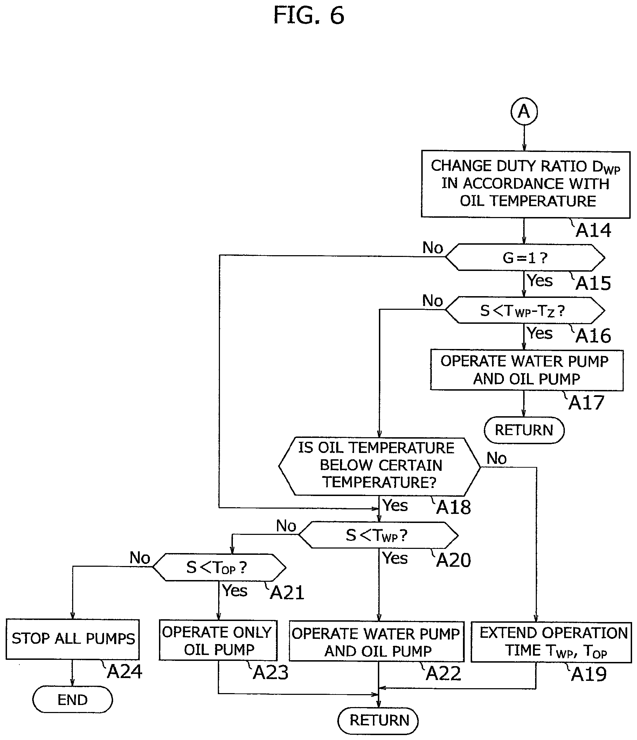

FIGS. 5 and 6 are flow charts illustrating the above control procedures. FIG. 5 mainly corresponds to control content while the engine 7 drives and FIG. 6 mainly corresponds to control content while the engine 7 is stopped. The control flag F used in these flows is set as F=1 when the water pump 15 and the oil pump 17 are operated. The control flag G is set as G=1 when the water pump 15 and the oil pump 17 are operated in the high load condition of the engine 7. Initial values (values when the engine 7 is started) of these control flags F, G are F=G=0.

The flow in FIG. 5 is started when the engine 7 is started. First, information detected by the various sensors 21 to 29 is input into the control device 1 (step A1) and it is determined whether the engine 7 is stopped or not under the condition of the control flag F being F=0 (steps A2, A3). If the engine 7 is driving, the control in the arithmetic period ends. On the other hand, if the engine 7 is stopped, it is determined whether the engine 7 was under high load conditions before being stopped (step A4). For example, if the average value of the number of turbo rotation within a set time immediately before the engine 7 was stopped is equal to a criterial number or more, it is determined that the engine 7 was under high load conditions and the duty ratio D_{WP} of the water pump 15 is set to the upper limit D_{MAX} (step A10). The operation time T_{WP} of the water pump 15 and the duty ratio D_{OP} and the operation time T_{OP} of the oil pump 17 are set based on the load and the oil temperature immediately before the engine 7 is stopped. Then, the measurement of a time S corresponding to an elapsed time after each of the electric pumps 15, 17 is operated is started while the control flags F, G are set as F=G=1 (step A12), and each of the electric pumps 15, 17 is operated (step A13) before the control in the arithmetic period ends. In this case, the operation proceeds from step A2 to step A14 in FIG. 6 in the next arithmetic period.

If the engine 7 was not under high load conditions in step A4, it is determined whether the operative position of the IGN switch 21 is the ON position (IGN-ON) or not (step A5). If the operative position is the OFF position (IGN-OFF), the duty ratio D and the operation time T for normal operation (IGN-OFF) are set based on characteristics indicated by the thick solid lines in FIGS. 3A and 3B (step A7). Then, the measurement of the time S is started while the control flag F is set as F=1 (step A11) and each of the electric pumps 15, 17 is operated (step A13) before the control in the arithmetic period ends.

On the other hand, if the operative position is the ON position (IGN-ON), it is determined whether an idling stop is frequently executed (step A6). If the idling stop is infrequently executed, the operation proceeds to step A9 and the duty ratio D_{WP} of the water pump 15 is set smaller than that in IGN-OFF while the operation time T_{WP} is set shorter than that in IGN-OFF on the basis of the characteristics indicated by thick broken lines in FIGS. 3A and 3B. If the idling stop is frequently executed, the operation proceeds to step A8 and the output of the water pump 15 is further curtailed. In this case, the duty ratio D_{WP} of the water pump 15 is set to still be smaller than that in IGN-ON on the basis of the characteristics indicated by the dash-dot-dot line in FIG. 3A. In all cases, the measurement of the time S is started while the control flag F is set as F=1 (step A11), and the electric pumps 15, 17 are operated (step A13) before the control in the arithmetic period ends.

In step A14 which is executed during the operation of the electric pumps 15, 17, the value of the duty ratio D_{WP} of the water pump 15 is changed and updated in accordance with the oil temperature. If the control flag G is set as G=1, it is determined whether the time S elapsed since the start of the operation of the electric pumps 15, 17 is less than a time obtained by subtracting a fixed time Tz from the operation time T_{WP} of the water pump 15 set in step A10 (step A16). As long as this condition is met, the operation state of the electric pumps 15, 17 is maintained as it is (step A17). On the other hand, when this condition is no longer met, it is determined whether the oil temperature has fallen to a certain temperature or less (step A18) and if the oil temperature has not fallen, the operation times T_{WP}, T_{OP} of the electric pumps 15, 17 are extended (step A19). Alternatively, if the oil temperature has fallen to the certain temperature or less, or the control flag G is set as G=0, the operation proceeds to step A20.

Steps A20 to A24 are a flow to control the operation time T of the electric pumps 15, 17. That is, if the time S is less than the operation time T_{WP} of the electric pump 15 (step A20), the operation state of the electric pumps 15, 17 is maintained (step A22). When the time S is equal to the operation time T_{WP} of the electric pump 15 or more, the water pump 15 is stopped and only the oil pump 17 is operated until the operation time T_{OP} of the oil pump 17 passes (steps A21, A23). Further, when the time S is equal to the operation time T_{OP} of the oil pump 17 or more, the oil pump 17 is also stopped and cool-down control of the charger 4 ends.

### [4. Operation and effect]

(1) In the above cooling control device, the detector 2 distinguishes the engine-stopped state caused by the idling stop and the engine-stopped state independent of the idling stop and the water pump 15 is controlled such that the work (such as the duty ratio D_{WP} or the operation time T_{WP}) to be done by the water pump 15 in the former state is to be smaller than the work to be done in the latter state. Accordingly, the charger 4 can be cooled while the engine 7 is in stopped state, and also rapid cooling and overcooling of the charger 4 can be suppressed so that appropriate cooling performance of the charger 4 can be achieved.
(2) In the above cooling control device, as shown in FIG. 3B, the operation time T_{OP} of the oil pump 17 is set longer than the operation time T_{WP} of the water pump 15. Accordingly, the bearing 34 of the charger 4 can be cooled slowly over time in a stable manner, so that degradation of lubricating oil due to an excessive temperature rise and an occurrence of seizure (locking, caulking) of the bearing 34 of the charger 4 can be suppressed. As shown in FIG. 2, while the water passage 36 has a function of cooling the housing 33 around the bearing 34, the oil passage 35 has a function of directly cooling the bearing 34. In the charger 4 structured as described above, by applying longer time for supplying the lubricating oil than for supplying the cooling water while the engine 7 is stopped, the cooling performance of the bearing 34 can be improved while power for operating the water pump 15 is reduced.
(3) In the above cooling control device, as shown in FIGS. 3A and 3B, the duty ratio D_{WP} of the water pump 15 is set to increase while the operation time T_{WP} is set to lengthen with an increasing oil temperature, that is, the output of the water pump 15 is controlled to increase with an increasing oil temperature. Accordingly, cooling performance of the housing 33 of the charger 4 can be improved, and thereby, an excessive temperature rise of lubricating oil can be suppressed.
(4) In the above cooling control device, on the other hand, the duty ratio D_{OP} of the oil pump 17 is controlled to be constant at least until the operation time T_{OP} passes after the oil pump 17 is actuated regardless of the temperature of lubricating oil. Accordingly, it is possible to suppress variations of cooling performance of lubricating oil flowing through the oil passage 35 due to changes in the amount of flow, so that the bearing 34 of the charger 4 can be cooled in a stable manner.
(5) In the above cooling control device, the initial output (initial value of the operation time T or the duty ratio D) of the water pump 15 and the oil pump 17 is set to increase with an increasing load before the engine 7 is stopped. The amount of flow per unit time of the refrigerant (engine cooling water, lubricating oil) can thereby be increased, so that the charger 4 can rapidly be cooled.
(6) In the above cooling control device, as indicated by the dash-dot-dot line in FIG. 3A, the initial output of the water pump 15 decreases with an increasing frequency of the executed idling stops of the engine 7. That is, in an operational state in which the idling stop is frequently executed, the initial output of the water pump 15 is set smaller under the assumption that the stopped engine 7 is likely to be restarted soon. Accordingly, overcooling of the charger 4 can be suppressed.
(7) In the above cooling control device, two types of the engine-stopped states are discerned based on the operative position of the IGN switch 21. Accordingly, with a simple control configuration, it is possible to clearly and reliably distinguish the stopped state of the engine 7 caused by an OFF operation of the IGN switch 21 and other stopped states, so that the precision in discerning two types of the engine-stopped states can be improved.

### [5. Modification]

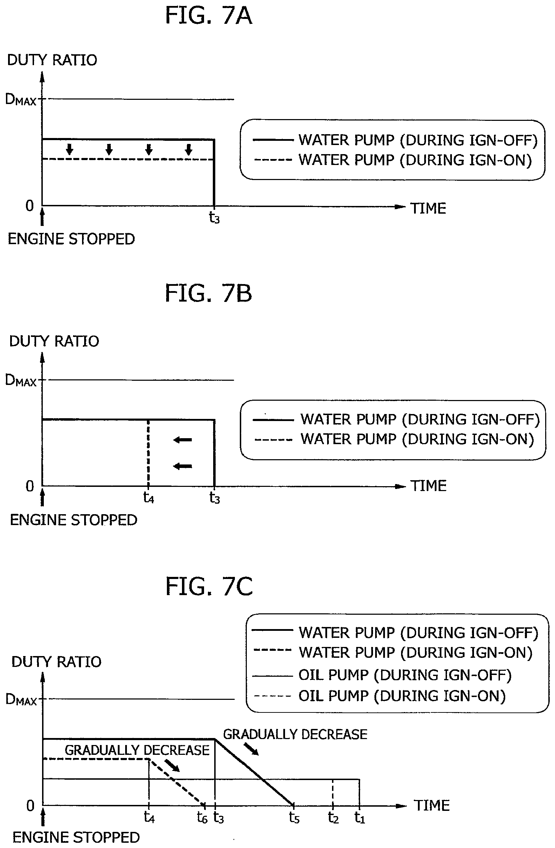

Although the output of the water pump 15 in the above embodiment, as shown in FIG. 4, is set as the duty ratio D_{WP} being smaller and the operation time T_{WP} being shorter during ING-ON than during IGN-OFF, the setting may not be limited to the above example. For instance, as shown in FIG. 7A, only the duty ratio D_{WP} during IGN-ON may be set smaller compared with that during IGN-OFF while the operation time T_{WP} being set equally. Alternatively, as shown in FIG. 7B, only the operation time T_{WP} during IGN-ON may be set shorter compared with that during IGN-OFF while the duty ratio D_{WP} being set equally. The same effect as that of the above embodiment can be achieved by at least reducing the output of the water pump 15 during IGN-ON compared with than during IGN-OFF.

The above embodiment assumes a control example in which, as shown in FIG. 4, the operations of the electric pumps 15, 17 stop when the operation times T_{WP}, T_{OP} pass , but control (so-called slow cooling control) that gradually reduces the outputs of the electric pumps 15, 17 with time may be added. For example, regarding the output of the water pump 15, as shown in FIG. 7C, the duty ratio D_{WP} may be set based on the output of the engine 7 and the oil temperature until the operation time T_{WP} passes and may be gradually decreased after the operation time T_{WP} passes. Thus, by avoiding excessively decreasing the temperature of the charger 4 abruptly (at a time), warming-up performance of the restarted engine 7 can be enhanced. In particular, it is possible to suppress overcooling of the charger 4 returning from the idling stop in a cold environment.

In the above embodiment, the control device 1 provided with the detector 2 and the controller 3 is described, but the detector 2 may be omitted from the control device 1. The controller 3 in such a case controls the work to be given by each of the electric pumps 15, 17 to a refrigerant at least in an engine-stopped state. For example, the controller 3 makes the operation time T_{OP} of the oil pump 17 longer than the operation time T_{WP} of the water pump 15 in an engine-stopped state.

In the above embodiment, the control intended for the charger 4 of the engine 7, particularly a turbocharger as a cooling object is described, but the concrete cooling object may not be limited to such an example and the control may alternatively be intended for a supercharger as a cooling object. In addition, various auxiliary machines (for example, an alternator, a motor generator, an air conditioner, or those configured to operate with engine 7 by being structurally linked to the engine 7) attached to the engine 7 can be the cooling objects. In addition, the types of the applicable internal combustion engine may not be limited and, for example, not only gasoline engines, but also diesel engines may be applicable.

### Reference signs list

1 control device
2 detector
3 controller
4 charger
7 engine
8 intercooler
9 throttle body
10 first cooling water circuit
11 second cooling water circuit (one of circulation paths of a refrigerant)
12 lubricating oil circuit (one of circulation paths of a refrigerant)
13 mechanical pump
14 first radiator
15 water pump (one of electric pumps)
16 second radiator
17 oil pump (one of electric pumps)
18 oil cooler
21 ignition key switch (IGN switch)

## Claims

1. A cooling control device comprising:
an electric pump (15, 17) set up on a circulation path (11) of a refrigerant that cools a charger (4) of an engine (7) or an auxiliary machine attached to the engine (7), the electric pump (15, 17) pressure-feeding the refrigerant, **characterised in** further comprising
a detector (2) that detects an engine-stopped state caused by an idling stop and an engine-stopped state independent of the idling stop; and
a controller (3) that controls work to be done by the electric pump (15, 17) in the engine-stopped states in accordance with a detection result by the detector (2), wherein
the controller (3) makes the work to be done by the electric pump (15,17) in the engine-stopped state caused by the idling stop smaller than the work to be done in the engine-stopped state independent of the idling stop.

2. The cooling control device according to claim 1, wherein
the electric pump (15, 17) includes an oil pump (17) that pressure-feeds lubricating oil to be supplied to a bearing (34) of the charger (4) or the auxiliary machine and a water pump (15) that pressure-feeds cooling water flowing inside a housing (33) of the bearing (34), and
the controller (3) makes an operation time of the oil pump (17) longer than that of the water pump (15) in the engine-stopped states.

3. The cooling control device according to claim 2, wherein
the controller (3) increases output of the water pump (15) with a rising temperature of the lubricating oil.

4. The cooling control device according to claim 2 or 3, wherein
the controller (3) maintains output of the oil pump (17) at a base value for at least a set time regardless of a temperature of the lubricating oil.

5. The cooling control device according to any one of claims 1 to 4, wherein
the controller (3) increases initial output of the electric pump (15, 17) with an increasing load of the engine (7) to be stopped.

6. The cooling control device according to any one of claims 1 to 5, wherein
the controller (3) decreases initial output of the electric pump (15, 17) with an increasing number of the idling stops of the engine (7) within a set period in a past.

7. The cooling control device according to any one of claims 1 to 6, wherein
the controller (3) gradually decreases output of the electric pump (15, 17) with an elapsed time.

8. The cooling control device according to any one of claims 1 to 7, wherein
the detector (2) determines two types of the engine-stopped states based on an operative position of an ignition key switch.

## Patentansprüche

1. Kühlungssteuerungsvorrichtung mit:
einer elektrischen Pumpe (15, 17), die in einem Zirkulationsweg (11) eines Kühlmittels angeordnet ist, das einen Lader (4) eines Motors (7) oder eine am Motor (7) befestigte Hilfsmaschine kühlt, wobei die elektrische Pumpe (15, 17) das Kühlmittel unter Druck fördert,
**dadurch gekennzeichnet, dass** die Vorrichtung ferner aufweist:
einen Detektor (2), der einen durch einen Leerlaufstopp verursachten Motorstoppzustand und einen vom Leerlaufstopp unabhängigen Motorstoppzustand erfasst; und
eine Steuereinheit (3), die die durch die elektrische Pumpe (15, 17) in den Motorstoppzuständen zu verrichtende Arbeit gemäß einem durch den Detektor (2) erhaltenen Erfassungsergebnis steuert,
wobei die Steuereinheit (3) veranlasst, dass die durch die elektrische Pumpe (15, 17) im durch den Leerlaufstopp verursachten Motorstoppzustand zu verrichtende Arbeit kleiner ist als die in dem vom Leerlaufstopp unabhängigen Motorstoppzustand zu verrichtende Arbeit.

2. Kühlungsteuerungsvorrichtung nach Anspruch 1, wobei
die elektrische Pumpe (15, 17) eine Ölpumpe (17), die einem Lager (34) des Laders (4) oder der Hilfsmaschine zuzuführendes Schmieröl unter Druck fördert, und eine Wasserpumpe (15) aufweist, die im Inneren eines Gehäuses (33) des Lagers (34) strömendes Kühlwasser unter Druck fördert, und
die Steuereinheit (3) veranlasst, dass eine Betriebszeit der Ölpumpe (17) in den Motorstoppzuständen länger ist als diejenige der Wasserpumpe (15).

3. Kühlungssteuerungsvorrichtung nach Anspruch 2, wobei
die Steuereinheit (3) die Ausgangsleistung der Wasserpumpe (15) mit steigender Temperatur des Schmieröls erhöht.

4. Kühlungssteuerungsvorrichtung nach Anspruch 2 oder 3, wobei
die Steuereinheit (3) die Ausgangsleistung der Ölpumpe (17) unabhängig von einer Temperatur des Schmieröls für mindestens eine vorgegebene Zeit bei einem Basiswert hält.

5. Kühlungssteuerungsvorrichtung nach einem der Ansprüche 1 bis 4, wobei
die Steuereinheit (3) die anfängliche Ausgangsleistung der elektrischen Pumpe (15, 17) mit zunehmender Last des zu stoppenden Motors (7) erhöht.

6. Kühlungssteuerungsvorrichtung nach einem der Ansprüche 1 bis 5, wobei
die Steuereinheit (3) die anfängliche Ausgangsleistung der elektrischen Pumpe (15, 17) mit einer zunehmenden Anzahl der Leerlaufstopps des Motors (7) innerhalb einer vorgegebenen Zeitdauer in der Vergangenheit vermindert.

7. Kühlungssteuerungsvorrichtung nach einem der Ansprüche 1 bis 6, wobei
die Steuereinheit (3) die Ausgangsleistung der elektrischen Pumpe (15, 17) im Laufe der Zeit allmählich vermindert.

8. Kühlungssteuerungsvorrichtung nach einem der Ansprüche 1 bis 7, wobei
der Detektor (2) basierend auf einer Betriebsposition eines Zündschlüsselschalters zwei Arten von Motorstoppzuständen bestimmt.

## Revendications

1. Dispositif de commande de refroidissement comprenant :
une pompe électrique (15, 17) installée sur une trajectoire de circulation (11) d'un réfrigérant qui refroidit un compresseur (4) d'un moteur (7) ou d'une machine auxiliaire fixée au moteur (7), la pompe électrique (15, 17) alimentant par pression le réfrigérant, **caractérisé en ce qu'**il comprend en outre :
un détecteur (2) qui détecte un état de moteur arrêté provoqué par un arrêt au ralenti et un état de moteur arrêté indépendant de l'arrêt au ralenti ; et
un organe de commande (3) qui commande le travail à faire par la pompe électrique (15, 17) dans les états de moteur arrêté selon un résultat de détection par le détecteur (2), dans lequel :
l'organe de commande (3) rend le travail à faire par la pompe électrique (15, 17) à l'état de moteur arrêté provoqué par l'arrêt au ralenti inférieur au travail à faire à l'état de moteur arrêté indépendant de l'arrêt au ralenti.

2. Dispositif de commande de refroidissement selon la revendication 1, dans lequel :
la pompe électrique (15, 17) comprend une pompe à huile (17) qui alimente par pression l'huile de lubrification à amener à un palier (34) du compresseur (4) ou de la machine auxiliaire et une pompe à eau (15) qui alimente par pression l'eau de refroidissement s'écoulant à l'intérieur d'un boîtier (33) du palier (34), et
l'organe de commande (3) rend le temps d'opération de la pompe à huile (17) plus long que celui de la pompe à eau (15) aux états de moteur arrêté.

3. Dispositif de commande de refroidissement selon la revendication 2, dans lequel :
l'organe de commande (3) augmente la sortie de la pompe à eau (15) avec une montée en température de l'huile de lubrification.

4. Dispositif de commande de refroidissement selon la revendication 2 ou 3, dans lequel :
l'organe de commande (3) maintient la sortie de la pompe à huile (17) à une valeur de base pendant au moins un temps défini indépendamment de la température de l'huile de lubrification.

5. Dispositif de commande de refroidissement selon l'une quelconque des revendications 1 à 4, dans lequel :
l'organe de commande (3) augmente la sortie initiale de la pompe électrique (15, 17) avec une charge croissante du moteur (7) à arrêter.

6. Dispositif de commande de refroidissement selon l'une quelconque des revendications 1 à 5, dans lequel :
l'organe de commande (3) diminue la sortie initiale de la pompe électrique (15, 17) avec un nombre croissant des arrêts au ralenti du moteur (7) dans une période définie dans le passé.

7. Dispositif de commande de refroidissement selon l'une quelconque des revendications 1 à 6, dans lequel :
l'organe de commande (3) diminue progressivement la sortie de la pompe électrique (15, 17) avec un temps écoulé.

8. Dispositif de commande de refroidissement selon l'une quelconque des revendications 1 à 7, dans lequel :
le détecteur (2) détermine deux types d'états de moteur arrêté sur la base d'une position opérationnelle d'un commutateur à clé de contact.
